Europäisches Patentamt

European Patent Office

Office européen des brevets

(19)

(11) Veröffentlichungsnummer: **0 133 482**
**B1**

# (12) EUROPÄISCHE PATENTSCHRIFT

(45) Veröffentlichungstag der Patentschrift:
**31.05.89**

(21) Anmeldenummer: **84108123.5**

(22) Anmeldetag: **11.07.84**

(51) Int. Cl.⁴: **B 60 C 23/00**

(54) Verfahren zur Regelung eines Reifenfüllgerätes.

(30) Priorität: **05.08.83 DE 3328280**

(43) Veröffentlichungstag der Anmeldung:
**27.02.85 Patentblatt 85/9**

(45) Bekanntmachung des Hinweises auf die Patenterteilung:
**31.05.89 Patentblatt 89/22**

(84) Benannte Vertragsstaaten:
**AT FR GB SE**

(56) Entgegenhaltungen:
**EP-A-0 019 463**
**FR-A-2 299 979**
**US-A-4 212 334**
**US-A-4 456 038**

(73) Patentinhaber: **MAHLE GMBH, Pragstrasse 26- 46
Postfach 50 07 69, D-7000 Stuttgart 50 (DE)**

(72) Erfinder: **Drogosch, Wolfgang, Stöckachstrasse 14,
D-7016 Gerlingen (DE)**
Erfinder: **Schlachter, Helmut, Regenpfeiferweg 25,
D-7000 Stuttgart 50 (DE)**
Erfinder: **Zolldann, Wolf, Pfarrstrasse 59, D-7307
Aichwald 2 (DE)**

(74) Vertreter: **Pfusch, Volker, Dipl.- Ing., MAHLE
GMBH Patentabteilung Pragstrasse 26- 46
Postfach 50 07 69, D-7000 Stuttgart 50 (DE)**

EP 0 133 482 B1

## Beschreibung

Die Erfindung betrifft ein Verfahren nach dem Oberbegriff des Patentanspruchs 1.

Ein derartiges Verfahren ist aus EP-A-0 019 463 bekannt. Bei diesem Verfahren erfolgt die Luftzufuhr schrittweise in konstanten vorbestimmten Zeitschritten bis der gewünschte Soll-Druck im Reifen erreicht ist. Bei diesem Verfahren ist unter Umständen eine relativ lange Zeit erforderlich, bis der gewünschte Soll-Druck in dem zu befüllenden Reifen erreicht ist.

Hiervon ausgehend liegt der Erfindung die Aufgabe zugrunde, ein Regelverfahren zu schaffen, bei dem die zum Füllen des Reifens erforderliche Zeit wesentlich verkürzt werden kann. Dabei wird angestrebt, möglichst bereits mit etwa 2 - 3 Füllvorgängen auszukommen.

Gelöst wird diese Aufgabe durch ein Regelverfahren mit den Merkmalen des Anspruchs 1.

Nach dieser Lehre wird in einem ersten Schritt ein sogenannter Probefüllvorgang durchgeführt und sodann durch Vergleich der gemessenen Druckerhöhung im Reifen mit der insgesamt erforderlichen Druckerhöhung der Zeitintervall für den folgenden Füllvorgang so festgelegt, daß bereits mit dem zweiten Füllvorgang der Soll-Druck theoretisch erreicht sein müßte. Für den Fall, daß der Soll-Druck mit dem zweiten oder weiteren Füllvorgängen in Wirklichkeit noch nicht erreicht sein sollte, so wird der jeweils nächste Füllvorgang nach dem gleichen Prinzip, jedoch mit den Ausgangswerten nach dem jeweils vorausgegangenen Füllvorgang durchgeführt.

Zweckmäßige Sicherheitsmaßnahmen für das erfindungsgemäße Regelverfahren sind Gegenstand der Unteransprüche.

Bei der Sicherheitsmaßnahme nach Anspruch 2 geht es darum, daß bei einem Versagen der Regeleinrichtung ein Überfüllen des Reifens ausgeschlossen ist. Bewirkt wird dies durch ein retriggerbares Monoflop, das ein Aufsteuern des an sich geschlossenen Verschlußventils am Ausgang des Reifenfüllgerätes nur dann zuläßt, wenn es ständig durch Impulse in zeitlich vorgegebenen Abständen angeregt ist. Die Zeitabstände können willkürlich festgelegt werden, z. B. auf ein bis zwei Sekunden.

Durch die Sicherheitsmaßnahme nach Anspruch 3 soll vermieden werden, daß bei einem tatsächlichen Lufteintritt in den Reifen aus dem Reifenfüllgerät, wenn dieser durch einen Defekt in der Druckwerterfassung oder übermittlung von der Regeleinrichtung nicht registriert wird, zu einem Überfüllen des Reifens führt.

Nach Anspruch 4 wird diese Sicherheitsmaßnahme noch dadurch verfeinert, daß das Reifenfüllgerät auch dann außer Betrieb gesetzt wird, wenn bei dem zweiten Füllvorgang, bei dem der gewünschte Soll-Druck ja bereits annähernd erreicht werden soll, nicht mindestens von der Regeleinrichtung eine Druckänderung in Höhe von 50 - 80 % des Wertes registriert wird, der zur Erreichung des Soll-Druckes rechnerisch erforderlich wäre.

Die Maßnahme nach Anspruch 5 sieht vor, daß bei einem versehentlich zu hoch vorgewählten Soll-Druck bei einem kleineren, für solche Drücke nicht geeigneten Reifen, wie z. B. Fahrradreifen, das Reifenfüllgerät ebenfalls außer Betrieb gesetzt wird.

Bei den vorbeschriebenen Sicherheitsmaßnahmen kann es in manchen Fällen auch ausreichen, daß anstelle des Außerbetriebsetzens des Reifenfüllgerätes zunächst eine Warnanzeige erscheint.

Ein Ausführungsbeispiel der Erfindung ist in der Zeichnung dargestellt.

Es zeigen:

Fig. 1　den schematischen Aufbau der zur Durchführung des Regelverfahrens notwendigen Einrichtung;

Fig. 2　ein Diagramm zur geometrischen Darstellung des mathematischen Bildungsgesetzes zur Ermittlung der Zeitintervalle der Reifenfüllvorgänge.

Mit 1 ist der Reifen als Regelstrecke und mit 2 eine als programmierter Microprozessor ausgebildete Regeleinrichtung dargestellt. Der Anschluß des Reifenfüllgerätes 3 an den Reifen 1 erfolgt über ein mit Magnetventilen ausgerüstetes Verschlußventil 4. An dem Reifenfüllgerät 3 steht der Luftdruck 5 aus einem Druckluftversorgungsbehälter an. Der in dem Reifen 1 anstehende Ist-Druck 6 wird von einem Meßmittel 7 erfaßt und umgewandelt in ein digitales Istwert-Signal der Regeleinrichtung als Größe 8 eingegeben. Über eine Leitung 9 kann der Ist-Wert an dem Reifenfüllgerät 3 auch noch einer Ist-Wertanzeige 10 zugeführt werden. Der gewünschte Reifen-Soll-Druck 11 wird über eine Soll-Wert-Eingabevorrichtung 12 der Regeleinrichtung 2 zusätzlich zu dem Reifen-Istdruck 6 (Größe 8) eingegeben.

Bei Inbetriebnahme des Reifenfüllgerätes 3 nach Anschluß an den Reifen 1 wird durch ein von der Bedienungsperson auszulösendes Startsignal durch die Regeleinrichtung 2 ein erster Füllvorgang eingeleitet, während gleichzeitig die Werte für den Reifen-Ist-Druck 6 und den Soll-Druck 11 von der Regeleinrichtung 2 aufgenommen werden. Der Zeitraum für den ersten füllvorgang ist in der Regeleinrichtung 2 mit $\Delta t_0$ = const fest eingespeichert. Für $\Delta t_0$ kann z. B. ein Wert von 500 ms vorgegeben werden. Die Zeitintervalle für die folgenden Füllvorgänge ermittelt die Regeleinrichtung 2 nach der im kennzeichnenden Teil des Patentanspruchs 1 angegebenen Lehre. Dazu ist der Regeleinrichtung folgendes Bildungsgesetz als Rechenprogramm eingegeben:

$$\Delta t_i = \Delta p_z \cdot \Delta t_{i-1}/\Delta p_i$$
$$\text{mit } i\, 1, 2, -----,$$
$$\Delta p_z = p_{soll} - p_i,$$
$$\Delta p_i = p_i - p_{i-1}$$

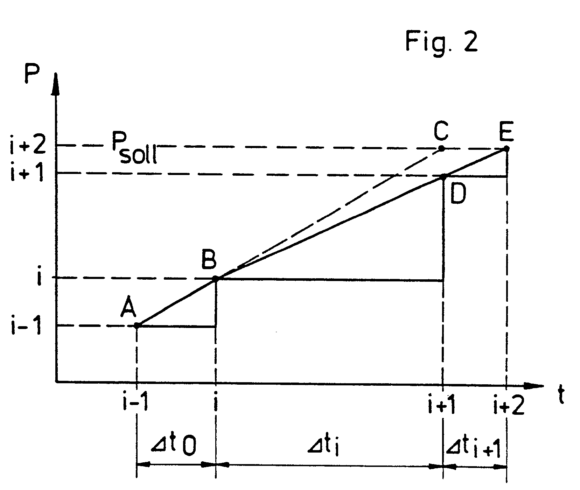

Die sich durch Anwendung des einprogrammierten Bildungsgesetzes ergebenden Regelschritte veranschaulicht das Diagramm in Fig. 2, in dem der Reifendruck p über der Füllzeit t aufgetragen ist. Der Punkt A bei (i-1) gibt den Ausgangszustand des Reifens nach dem Anschließen des Reifenfüllgerätes an. Der erste Füllvorgang, ein sogenannter Probeschuß, erfolgt in einem fest vorgegebenen Zeitintervall $t_o$ = const. Er bewirkt in dem Reifen eine Erhöhung des Druckes auf den Punkt B mit den Koordinaten i. Für den zweiten Füllvorgang ermittelt die Regeleinrichtung nun anhand des Bildungsgesetzes das Zeitintervall, bei dem bei pro Zeiteinheit fortschreitend gleichbleibender Druckerhöhung der Solldruck theoretisch bereits mit diesem Füllvorgang erreicht sein müßte. Daraus ergibt sich folgendes Zeitintervall:

$$\Delta t_i = (p_{soll} - p_i) \cdot \Delta t_o/(p_i - p_{(i-1)})$$

Für den Fall, daß der Druck tatsächlich auf den Wert C mit der Ordinate $p_{soll}$ steigt, ist das Befüllen des Reifens abgeschlossen. Ist dies jedoch nach $\Delta t_i$ in Wirklichkeit noch nicht gegeben, sondern vielmehr erst der unter $p_{soll}$ liegende Punkt D erreicht, so wird für den nächsten Füllvorgang folgendes neuer Zeitintervall ermittelt und eingestellt:

$$\Delta t_{i+1} = (p_{soll} - p_{i+1}) \cdot \Delta t_i/(p_{i+1} - p_i)$$

Hat nach dem mit diesem Zeitintervall durchgeführten folgenden dritten Füllvorgang der dann gemessene Druckwert nunmehr den Solldruckwert $p_{soll}$ erreicht, ist das Befüllen des Reifens wiederum abgeschlossen. Ist der Solldruck noch immer nicht erreicht, werden nach dem beschriebenen Muster weitere Füllvorgänge durchgeführt, bis der Solldruck endgültig erreicht ist. In der Regel ist der Reifensolldruck allerdings nach etwa 2 - 3 Füllvorgängen im Rahmen der vorgegebenen Genauigkeit erreicht. Als Toleranzbereich kann z. B. eine Toleranz von +/- 0,5 % des max. einstellbaren Soll-Druckes vorgegeben werden. Der besondere Vorteil des erfindungsgemäßen Verfahrens besteht darin, jeweils im voraus die theoretisch bei gleichbleibenden Druckerhöhung pro Füllzeiteinheit insgesamt erforderliche Füllzeit ermitteln und für den nächstfolgenden Füllvorgang einstellen zu können. Dadurch ist es möglich, mit einem Minium an Füllvorgängen auszukommen, was wiederum ein sehr schnelles Befüllen bedeutet.

Das vorstehend beschriebene Bildungsgesetz gilt nur, wenn der Speisedruck konstant gehalten wird. Bei nicht konstantem Speisedruck, wie er sich beim Entleeren eines relativ kleinen Vorratsbehälters ohne Verwendung eines Reduzierventils ergibt, gelten andere, nicht lineare Bildungsgesetze. Das Regelverfahren ist jedoch im Prinzip dasselbe.

Vorstehend ist lediglich der Fall beschrieben, in dem ein zu befüllender Reifen zu geringen Druck aufweist und daher befüllt werden muß. Das Regelverfahren gilt selbstverständlich auch bei Fällen, in denen Reifen von einem hohen Ist-Druck auf einen niedrigeren Soll-Druck gebracht werden sollen. In diesen Fällen wird der erste Füllvorgang lediglich durch einen ersten Ablaßvorgang mit fest vorgegebenem Zeitintervall ersetzt. Die nachfolgenden Ablaßvorgänge bestimmt das einprogrammierte Bildungsgesetz in analoger Weise wie beim Befüllen. Der Unterschied besteht lediglich darin, daß nicht Füll- sondern Ablaßzeiten festgelegt und eingestellt werden.

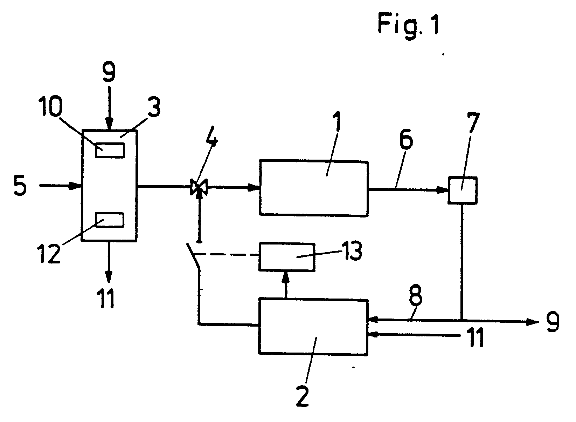

Der retriggerbare Monoflop nach Anspruch 2 ist in Fig. 1 der Zeichnung unter dem Bezugszeichen 13 eingetragen.

**Patentansprüche**

1. Verfahren zur Regelung eines Reifenfüllgerätes (3) mit Voreinstellbarkeit des gewünschten Reifendruckes, bei dem eine elektronische Regeleinrichtung (2) ein Verschlußventil (4) zur automatischen Veränderung der Luftmenge in einem Reifen (1) betätigt und diese Veränderung schrittweise erfolgt, indem jeweils in einzelnen Schritten Luft zu- oder abgeführt wird und nach jeweils anschließendem Vergleich des neuen Ist-Druckes mit dem voreingestellten Soll-Druck entschieden wird, ob die schrittweise Luftzufuhr fortzusetzen ist oder wegen Erreichens des Soll-Druckes der Füllvorgang abzuschließen ist, dadurch gekennzeichnet, daß nach einem ersten mit einem fest vorgegebenen Zeitintervall erfolgten Füll- oder Ablaßvorgang das Zeitintervall für den nächsten Füll- oder Ablaßvorgang durch Vergleich der gemessenen tatsächlichen Druckveränderung mit der insgesamt zur Erreichung des Solldruckes erforderlichen Druckveränderung so ermittelt und eingestellt wird, daß damit der Solldruck theoretisch bereits mit diesem nächsten Füll- oder Ablaßvorgang erreicht sein müßte und daß bei Nichterreichung die Zeitintervalle notwendiger weiterer Füll- oder Ablaßvorgänge in jeweils gleicher Weise unter Verwendung der Zeit- und Druckveränderungswerte des jeweils vorausgegangenen Füll- oder Ablaßvorganges ermittelt und eingestellt werden, bis der Solldruckwert mit einer vorgegebenen Genauigkeit erreicht ist.

2. Regelverfahren nach Anspruch 1, dadurch gekennzeichnet, daß als Sicherheitsmaßnahme vorgesehen ist, daß in der Regeleinrichtung die Steuersignale zum Öffnen des ohne Signale geschlossenen Verschlußventils (4) ein retriggerbares Monoflop (13) durchlaufen, das diese nur weiterleitet, solange es durch in vorbestimmbaren Zeitabständen eingeleitete Impulse für die betreffenden Zeitabstände jeweils aktiviert ist.

3. Regelverfahren nach Anspruch 1, ggf. auch in Kombination mit Anspruch 2, dadurch gekennzeichnet daß als Sicherheitsmaßnahme vorgesehen ist, daß die Regeleinrichtung (2) für den Fall, daß sie nach dem ersten Füllvorgang keine Druckänderung registriert, dies anzeigt und/oder das Reifenfüllgerät (3) außer Betrieb setzt.

4. Regelverfahren nach Anspruch 3, dadurch gekennzeichnet, daß als Sicherheitsmaßnahme vorgesehen ist, daß die Anzeige und/oder das Außerbetriebsetzen des Reifenfüllgerätes (3) erfolgt, wenn die registrierte Druckänderung in der Regeleinrichtung (2) nach dem zweiten Füllvorgang nicht mindestens zwischen 50 bis 80 % des Wertes ist, der zur Erreichung des Soll-Druckes im Reifen erforderlich ist.

5. Regelverfahren nach einem der vorhergehenden Ansprüche, dadurch gekennzeichnet, das als Sicherheitsmaßnahme vorgesehen ist, daß aus der bei dem ersten Füllvorgang gemessenen Druckänderung auf das Volumen des zu befüllenden Reifens (1) hochgerechnet wird und das Reifenfüllgerät (3) außer Betrieb gesetzt wird, wenn der voreingestellte Druck höher liegt als ein für das hochgerechnete Volumen vorbestimmter oberer Druckgrenzwert

## Claims

1. A method of regulating a tyre filling device (3) having presetting facility for the desired tyre pressure, in which an electronic control device (2) actuates a closure valve (4) for automatically changing the quantity of air in a tyre (1) and this change takes place intermittently, in that air is fed in or removed in individual steps and, after a subsequent comparison on each occasion of the new actual pressure with the preset theoretical pressure, a decision is made as to whether the intermittent air feed is to be continued or, because the theoretical pressure has been reached, the filling operation is to be terminated, characterized in that, after a first filling or discharging operation, carried out with a fixed, predetermined time interval, the time interval for the next filling or discharge operation is so determined and set by a comparison of the measured actual pressure change with the total pressure change necessary for reaching the theoretical pressure that the theoretical pressure ought thereby theoretically to be reached with this next filling or discharge operation and that, if it is not reached, the time intervals for necessary further filling or discharge operations are determined and set in the same manner each time using the values for the time and pressure change of the preceding filling or discharge operation, until the theoretical pressure value has been reached to a predetermined accuracy.

2. A control method according to Claim 1, characterized in that, as safety measure it is provided that in the control device the control signals for opening the closure valve (4), which without signals is closed, pass through a retriggerable mono flop (13), which transmits these signals onwards only so long as it is activated by pulses initiated at predeterminable time intervals for the relevant time intervals.

3. A control method according to Claim 1, possibly also in combination with claim 2, characterized in that, as safety measure it is provided that the control device (2), in the case where it has not recorded any pressure change after the first filling operation, indicates this and/or puts the tyre filling device (3) out of operation.

4. A control method according to Claim 3, characterized in that, as safety measure it is provided that the display and/or the putting out of operation of the tyre filling device (3) takes place when the recorded pressure change in the control device (2) after the second filling operation is not at least between 50 and 80 % of that value which is necessary for reaching the theoretical pressure in the tyre.

5. A control method according to one of the preceding Claims, characterized in that, as safety measure it is provided that a projection is made from the pressure change measured in the first filling operation of the volume of the tyre (1) to be filled, and the tyre filling device (3) is put out of operation if the preset pressure is higher than an upper pressure limiting value predetermined for the projected volume.

## Revendications

1. Procédé de réglage d'un appareil (3) de gonflage de pneumatiques, avec possibilité de détermination à l'avance de la pression voulue pour le pneumatique, procédé dans lequel un dispositif (2) électronique de réglage actionne une valve (4) d'arrêt pour modifier automatiquement la quantité d'air se trouvant dans un pneumatique (1), et cette modification a lieu progressivement par étapes, du fait qu'à chaque fois, dans les diverses étapes, on introduit de l'air ou on laisse partir de l'air et selon la comparaison immédiatement effectuée à chaque fois ensuite de la nouvelle pression réelle avec la pression de consigne réglée au préalable, il est décidé s'il faut poursuivre l'apport d'air par étapes ou si, parce que la pression de consigne est atteinte, il faut arrêter l'opération de gonflage, procédé caractérisé en ce qu'après une première opération de gonflage ou de départ d'air, effectuée avec un intervalle de temps fixe donné à l'avance, on détermine et règle les intervalles de temps pour l'opération suivante de gonflage ou de départ d'air, en comparant la modification de pression mesurée en fait avec la modification de pression nécessaire au total pour atteindre la pression de consigne, de manière à devoir ainsi atteindre théoriquement déjà à l'aide de cette opération suivante de gonflage ou de départ d'air la pression de consigne et caractérisé en ce que, si elle n'est pas atteinte, on détermine et règle à chaque fois de la même façon les intervalles de temps nécessaires pour d'autres opérations de gonflage ou de départ d'air, en utilisant les valeurs de variation de temps et de pression de l'opération à chaque fois précédente de gonflage ou de départ d'air, jusqu'à atteindre, avec une précision donnée à l'avance, la valeur de la pression de consigne.

2. Procédé de réglage selon la revendication 1, caractérisé en ce qu'on prévoit comme mesure de sécurité le fait que, dans le dispositif de réglage, les signaux de commande destinés à ouvrir une valve (4) d'arrêt, qui, sans les signaux, est fermée, parcourent une bascule monostable (13) redéclenchable; en ce que cette bascule n'est conductrice que tant qu'elle est à chaque fois activée, pendant les intervalles de temps correspondants, par des impulsions introduites en des intervalles prédéterminés de temps.

3. Procédé de réglage selon la revendication 1, prise éventuellement en combinaison avec la revendication 2, caractérisé en ce que l'on prévoit comme mesure de sécurité le fait qu'au cas où, après la première opération de gonflage, le dispositif (2) de réglage n'enregistre pas de variations de pression, ce dispositif affiche ce renseignement et/ou met hors service l'appareil (3) de gonflage de pneumatiques.

4. Procédé de réglage selon la revendication 3, caractérisé en ce qu'on prévoit, comme mesure de sécurité, le fait que l'affichage et/ou la mise hors service de l'appareil (3) de gonflage de pneumatique se produit lorsqu'après la seconde opération de gonflage, la modification de pression enregistrée dans le dispositif (2) de réglage ne représente pas au moins une valeur comprise entre 50 et 80 % de la valeur nécessaire pour l'obtention de la pression de consigne dans le pneumatique.

5. Procédé de réglage selon l'une des revendications précédentes, caractérisé en ce qu'on prévoit, comme mesure de sécurité, à partir de la variation de pression mesurée au cours de la première opération de gonflage, une extrapolation au volume du pneumatique (1) à gonfler et l'on met hors service l'appareil (3) de gonflage de pneumatiques lorsque la pression établie à l'avance est supérieure à une valeur limite supérieure de pression, déterminée à l'avance pour le volume pour lequel l'extrapolation a lieu.

Fig. 1

Fig. 2